# EUROPEAN PATENT APPLICATION

(11) **EP 2 868 632 A1**
(43) Date of publication of application: **06.05.2015**
(21) Application number: 13306504.5
(22) Date of filing: 31.10.2013
(51) Int. Cl.: C02F 3/34, C02F 103/20, C02F 103/34

(54) **Method for the inactivation of virginiamycin**

(71) Applicant: Da Volterra, 75011 Paris (FR)
(72) Inventor: De Gunzburg, Jean, London, SW7 3AT (GB); Couillerot, Olivier, 75011 PARIS (FR); Bandinelli, Pierre-Alain, 77440 Mary sur Marne (FR)
(74) Representative: Sekhri, Redha

(57) **Abstract**

The invention relates to methods for inactivating virginiamycin. The invention further relates to the use of a laccase for inactivating virginiamycin.

## Description

The invention relates to methods for inactivating virginiamycin. The invention further relates to the use of a laccase for inactivating virginiamycin.

### Background of the invention

Antibiotics have been excessively used since the Second World War, leading to the emergence of resistant strains, a growing problem in the world today. One major concern is the use of antibiotics during bioethanol manufacturing process. As exposed in international application WO2011/046967 and described in the "Fueling Resistance? Antibiotics in Ethanol production" report published in July 2009 by the Institute for Agriculture and Trade Policy in the USA, ethanol producers usually add antibiotics, in particular virginiamycin, to the fermenters in order to control bacteria that may compete with yeast during fermentation converting sugar into lactic acid rather than ethanol. When antibiotics are used during fermentation, stable antibiotic molecules remain in the fermentation by-products. The by-products may be edible and consist for example in distillers dry grains (DDG) in the case of corn ethanol production or a mixture of lignin, unfermented sugars, minerals and sometimes undigested cellulose. These edible residues are often valuable as they are ultimately sold as animal feed. As detailed in a communication from FDA on September 30, 2009 entitled "FY 2010 Nationwide Survey of Distillers Grains for Antibiotic Residues" (FACTS Assignment # 1100391), not all antibiotics are degraded during ethanol production and some antibiotics may be concentrated in the distillers grains. The active antibiotics remaining in the edible residues may finally end up entering the food chain of ruminants, poultry, swine, equine and fish feed. This uncontrolled administration of antibiotics to animals may significantly impact the rise and dissemination of resistance. There is therefore a strong need to remove antibiotic residues from the possibly edible by-products of ethanol manufacturing processes.

At present, no efficient means to inactivate virginiamycin have been proposed. There is therefore a clear need for inactivation of virginiamycin.

### Summary of the invention

The inventors have surprisingly found that virginiamycin may be inactivated by a laccase. Therefore, the present invention relates to the use of a laccase for inactivating virginiamycin. The use of a laccase to prevent environmental pollution by virginiamycin and/or for virginiamycin remediation in the environment or in waste is also disclosed.

The invention further provides a method for inactivating virginiamycin in a setting in need thereof, comprising bringing said setting into contact with a laccase.

The invention also provides an enzymatic method for inactivating virginiamycin in the environment, comprising bringing into contact an environment setting to be treated with a laccase. As such, the invention relates in particular to a method for the enzymatic treatment of an environment setting, comprising treating said environment setting with a laccase, thereby inactivating virginiamycin present in said environment setting.

The invention further provides methods for preventing virginiamycin pollution of the environment by inactivating virginiamycin in waste and effluents contaminated with this antibiotic, prior to its rejection into the environment. Accordingly, the invention also relates to a method for the enzymatic remediation of waste material or effluent before it reaches the environment, comprising bringing said waste material or effluent into contact with a laccase, thereby inactivating virginiamycin present in said waste material or effluent.

The uses and methods of the invention are particularly useful for decontaminating environment settings like soils or waters. In a particular embodiment, waters to be de-polluted are surface waters like rivers or lakes, ground waters, underground waters or collected waters destined to human or animal use. Representative soils include industrial soils, farm soils or agricultural soils.

The uses and methods of the invention are also useful for decontaminating wastes that are polluted by virginiamycin before they reach the environment. In a particular embodiment, wastes to be treated are industrial wastewater, recycled process water, pharmaceutical plant wastewater, municipal wastewater, sanitary wastewater, sewage, farm wastewater, animal farm wastewater, fish farm wastewater, agricultural site wastewater, hospital wastewater, medical centre wastewater, nursing home wastewater, urban wastewater, collective wastewater, wastewater treatment plant effluents or manure from animal farms and released effluents.

The invention also relates to a method for the removal of virginiamycin in by-products of a bioethanol manufacturing process comprising bringing said by-products into contact with a laccase, thereby inactivating antibiotics present in said by-products. In a particular embodiment, said by-products are edible residues, particularly distillers dry grains used as animal feed.

### Detailed description of the invention

According to the present invention, the terms "inactivation of virginiamycin" and variations thereof denote the total or partial reduction of the activity of this antibiotic, in particular as demonstrated in the examples. According to the present invention, an inactivation is total if growth of bacteria, sensitive to a certain concentration of virginiamycin, in the presence of said concentration of virginiamycin after its treatment with a laccase, is essentially identical, or identical, to growth in the absence of the antibiotic.

Virginiamycin is a streptogramin antibiotic. In a particular embodiment, the laccase is used to inactivate virginiamycin M1 (also known as Pristinamycin IIA). In a further embodiment, the laccase is used to inactivate virginiamycin S1. In a further particular embodiment, the laccase is used to inactivate a combination of virginiamycin M1 and virginiamycin S1. In a particular embodiment, the virginiamycin is a mixture of 75 % of virginiamycin M1 and 5 % of virginiamycin S1 which is commercially available (e.g. Santa Cruz SC-202383).

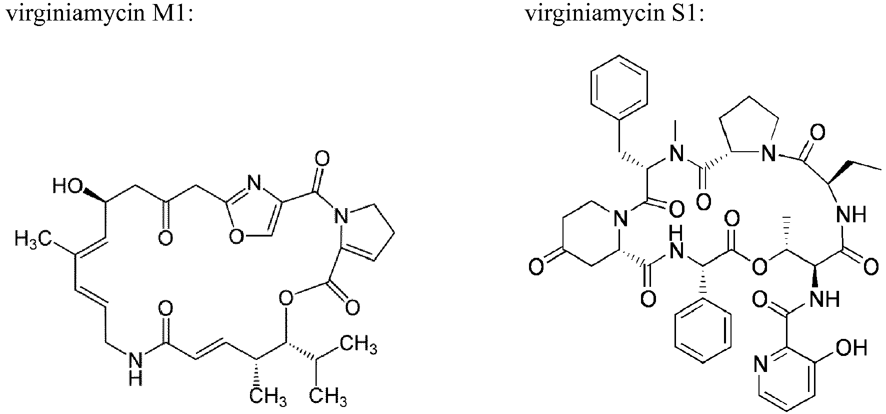

Laccase has been shown by the inventors to be effective at inactivating virginiamycin. This property is of particular interest since laccase is an enzyme readily available, produced at the industrial scale for a number of different applications (Mayer and Staples 2002; Torres et al. 2003; Couto and Herrera 2006). Laccases are enzymes that catalyze the oxidation of a substrate with dioxygen. Such enzymes are known from microbial, plant and animal origins (Thurston 1994; Baldrian 2006). According to the present invention, any laccase enzyme comprised in the enzyme classification EC 1.10.3.2 as set out by the Nomenclature Committee of the International Union of Biochemistry and Molecular Biology (IUBMB), or any fragment or modified enzyme derived there-from exhibiting laccase activity, may be used. The enzymes may be derived from plants, bacteria or fungi (including filamentous fungi and yeasts). Suitable examples from plants include *Rhus vernicifera* or *Acer pseudoplatanus L.* Suitable examples from fungi include laccases derivable from a strain of *Aspergillus, Neurospora,* e.g., *N. crassa, Podospora, Botrytis, Collybia, Fomes, Lentinus, Pleurotus, Trametes,* e.g., *T. villosa* and *T. versicolor, Rhizoctonia,* e.g., *R. solani, Coprinus,* e.g., *C. cinereus, C. comatus, C. friesii,* and *C. plicatilis, Psathyrella,* e.g., *P. condelleana, Panaeolus,* e.g., *P. papilionaceus, Myceliophthora,* e.g., *M. thermophila, Schytalidium,* e.g., *S*. *thermophilum, Polyporus,* e.g., *P. pinsitus, Phlebia,* e.g., *P. radita, Coriolus,* e.g., *C. hirsutus* and *C*. Versicolor, or *Pleurotus,* e.g. *P. ostreatus.* Suitable examples from bacteria include laccases derivable from a strain of *Bacillus, e.g., B. Sphaericus, B. Subtilis and B. Halodurans, Pseudomonas, e.g., P. Fluorescens, P. Maltophila, P. Putida, P. Syringae and P. Aerophilum, Streptomyces, e.g. S. Antibioticus, S. Griseus, Aquifex Aeolicus, Azospirillum Lipoferum, Escherichia Coli, Leptothrix dicophora, Marinomonas mediterranea, Oceanobacillus iheyensis, Thermus thermophilus, Xanthomonas campesteris.*
In a preferred embodiment, the laccase of the invention is a fungal laccase, preferably from *Trametes versicolor* (previously known as *Coriolus versicolor*),*Myceliophotora thermophila, Pleurotus Ostreatus* or *Agaricus bisporus.. T. versicolor* produces several enzymes carrying laccase activity, principally laccase 2, laccase 4, laccase 5 and laccase III, which are identified in the Uniprot protein database by accession numbers Q12718 (amino acid sequence shown in SEQ ID NO:1), Q12719 (amino acid sequence shown in SEQ ID NO:2), Q12717 (amino acid sequence shown in SEQ ID NO:3), and Q8TFM1 (amino acid sequence shown in SEQ ID NO:4) respectively. They are distinct enzymes of respectively 519, 520, 527 and 520 amino acids that are secreted by the organism. Laccase 2 shares 67% amino acid identity with laccase 4, 69% with laccase 5, and 78% with laccase III; laccases 4 and 5 share 75% amino acid identity, while laccase III shares 70% aminoacid identity with laccases 4 and 5. In the present invention, the implemented laccase may consist of one or several of the enzymes with laccase activity secreted by *T. versicolor,* in particular one of laccases 2, 4, 5 and III, any combination of 2 enzymes or 3 enzymes, or the four of them. Accordingly, the invention relates also to the implementation of a laccase or a mixture of laccases from *T. versicolor. M. thermophila* produces several enzymes carrying laccase activity, principally laccase like protein, extracellular laccase lcc1, laccase with copper binding domain, which are identified in the Uniprot protein database by accession numbers G2QFD0, G2QG31, and G2Q560. They are distinct enzymes of respectively 650, 616, and 595 amino acids that are secreted by the organism. In the present invention, the implemented laccase may consist of one or several of the enzymes with laccase activity secreted by *M. thermophila,* in particular one of laccase like protein, extracellular laccase lcc1, laccase with copper binding domain, any combination of 2 enzymes or the 3 of them. Accordingly, the invention relates also to the implementation of a laccase or a mixture of laccases from *M. thermophila.*
The invention also relates to the implementation of a mixture of laccases of different origins, in particular laccases from Basidiomycetes or Ascomycetes organisms.
The laccase may be one which is producible by a method comprising cultivating a host cell transformed with a recombinant DNA vector which carries a DNA sequence encoding said laccase as well as DNA sequences encoding functions permitting the expression of the DNA sequence encoding the laccase, in a culture medium under conditions permitting the expression of the laccase enzyme, and recovering the laccase from the culture.
Laccase activity may be determined from the oxidation of syringaldazin under aerobic conditions. The violet colour produced is measured spectrophotometrically at 530 nm. The analytical conditions are 19 mM syringaldazine, 23 mM acetate buffer, pH 5.5, 30°C, 1 min. reaction time. 1 laccase unit (LACU) is the amount of enzyme that catalyses the conversion of 1.0 mmol syringaldazine per minute under these conditions. Laccase activity may further be assessed using ABTS as substrate (combined with spectrophotometrical measures at 405 nm), or according to the process described in the examples, using virginiamycin as a substrate.
In addition, in the uses, methods and compositions of the invention, the laccase may be used in combination with one or more redox mediators. A redox mediator is a compound which serves as a laccase substrate and enhances the enzyme action and/or the range of compounds that can be converted. The electrooxidation or electroreduction of the enzyme is often facilitated by the presence of a redox mediator in the solution; it can, for example, facilitate the electron transport between the enzyme and the substrate to inactivate. ABTS (2,2'-azino-bis(3-ethylbenzothiazoline-6-sulphonic acid) is known to be a powerful redox mediator for laccase and the enhanced activity of laccase with ABTS is demonstrated in the literature against a wide range of substrates. Representative redox mediators are ABTS, HBT (1-hydroxybenzotriazole), MeS (methyl syringate), syringaldehyde (SYD), vanillin, TEMPO (2,2,6,6-tetramethyl-piperidine-1-oxyl), and VIOL (violurilic acid). Natural and synthetic mediators may be implemented in the present invention. In a preferred embodiment, the redox mediator is a natural redox mediator, and especially lignin-derived compound, as being cheaper and less toxic than chemicals not found naturally in the environment. For example, for the different methods and uses envisioned here, the laccase may be used in combination with one or more natural mediators such as syringaldehyde or acetosyringone.

The invention further provides a method for inactivating virginiamycin in a setting in need thereof, comprising bringing said setting into contact with a laccase. Representative settings that could be treated include an environment setting, wastes (e.g. wastes before they reach the environment) and preferably by-product of a bioethanol manufacturing process, as defined below.

The invention further provides a method for inactivating virginiamycin in the environment, or in wastes before they reach the environment, comprising bringing into contact the environment setting or the waste to be treated with a laccase.

The invention further provides an enzymatic method for providing virginiamycin decontamination in the environment, comprising bringing into contact the environment setting to be depolluted with a laccase.

The uses and methods of the invention are particularly useful for decontaminating environment settings like soils or waters.

The invention thus in particular relates to a method for the enzymatic treatment of an environment setting, comprising treating said environment setting with a laccase, thereby inactivating virginiamycin present in said environment setting.

Waters to be depolluted can be surface waters like rivers, lakes, ground waters, underground waters or collected waters destined to human or animal use. Representative soils include industrial soils, farm soils or agricultural soils.

The uses and methods of the invention are also useful for decontaminating wastes that are polluted by virginiamycin before they reach the environment. Accordingly, in a particular aspect, the invention relates to a method for the enzymatic remediation of waste material or effluent before it reaches the environment, comprising bringing said waste material or effluent into contact with a laccase (e.g., from *T. versicolor, M. thermophila, A. bisporus or P. ostreatus*), thereby inactivating virginiamycin present in said waste material or effluent.
In a particular embodiment, wastes to be treated are industrial wastewater, recycled process water, pharmaceutical plant wastewater, municipal wastewater, sanitary wastewater, sewage, farm wastewater, animal farm wastewater, fish farm wastewater, agricultural site wastewater, hospital wastewater, medical centre wastewater, nursing home wastewater, urban wastewater, collective wastewater, wastewater treatment plant effluents or agricultural manure.

The uses and methods of the invention are also useful for removing antibiotics in the by-products of a bioethanol manufacturing process. The present invention thus also relates to a method for the removal of virginiamycin in by-products of a bioethanol manufacturing process comprising bringing said by-products into contact with a laccase, thereby inactivating virginiamycin present in said by-products. In a particular embodiment, said by-products are edible residues, particularly distillers dry grains used as animal feed. In a particular embodiment of the invention, the by-products of the bioethanol manufacturing processes can be solid by-products or a mixture of liquid and solid by-products collected after the fermentation step. In a particular embodiment, the laccase disclosed in the invention may be added to the fermentation tanks at the end of the fermentation step to degrade the remaining virginiamycin. Alternatively, the fermentation by-products may be brought into contact with a laccase immobilized on a solid support.

The laccase can be formulated in liquid form. In one aspect of this embodiment, the laccase can be sprayable or delivered using a hosepipe or equivalent means (e.g., for dispensing the laccase to potentially contaminated soils, for example farm soils). The laccase can also be in liquid form and poured in the environment or industrial setting, for example in a container of a sewage treatment plant or in a tank used in a fermentation process, or sprayed on contaminated manure or soils. In order to obtain optimal efficiency of virginiamycin inactivation when the laccase is poured, it can be advantageous to ensure a homogeneous presence of the laccase within the setting to be treated. This can be achieved by mixing the laccase with the setting to be decontaminated. In another aspect of the invention, the composition can be diluted in wash solutions used for washing contaminated soils.

The laccase can also be in solid form. For example, the laccase can be comprised in a powder. The powder can be sprayed or poured on the environment or industrial setting to be treated.

In one aspect of this embodiment, a composition comprising a laccase may be used to treat environmental waters or wastewaters. It had been shown that the optimal range of pH for the laccase enzyme of the composition is 5 to 7. In use, the composition of the invention can be added to batch reactors containing wastewaters or environmental waters to be treated after adjustment of their pH to the optimal pH of activity of the laccase used to inactivate antibiotics. Then, the laccase is allowed to react for a time sufficient to inactivate virginiamycin.

Depending on the initial virginiamycin concentration and laccase concentration within the batch reactor, a "time sufficient to inactivate virginiamycin" can for example range from 5 minutes to 8 days, or 24 to 168 hours, or 5 minutes to 5 hours. Other kinetics can be envisioned within well-stirred reactors or continuously-stirred reactors.

An effective amount of laccase is used for inactivating virginiamycin according to the invention. The terms "effective amount" denote an amount suitable for inactivating the virginiamycin present in the environment setting or waste material to be treated. These amounts can vary to a large extent depending on the concentration of virginiamycin, the activity of the laccase, the temperature, etc. The person skilled in the art is able to adapt the amount of laccase after having measured these parameters.

The amount of laccase used in the methods of the present invention is preferably 0.0001 - 10 000 000 000 U/liter or kilogram, preferably 0.001 - 1 000 000 000 U/liter or kg and more preferably 0.01 - 100 000 000 U/liter or kilogram of the environment setting or waste material to be treated. According to the present invention, one antibiotic-inactivating activity unit (1 U) is herein defined as the enzymatic activity to fully inactivate (100% inactivation) 1 pmol of the virginiamycin in 1 minute at 22°C. This enzymatic activity can be measured with methods known to the man skilled in the art.

The treatment can be executed at a temperature of 4°C to 75°C, in particular of 10°C to 40°C and typically around 35°C. When temperature decreases, incubation times may be increased to ultimately obtain the desired effective inactivation of antibiotics.

Laccase may be immobilised by adsorption onto a solid surface, chemical coupling, or a combination of these methods. Laccase may also be immobilized with one or more redox mediators on the same supports. Immobilized forms of the laccase can also be used in packed-bed reactors. For example, the substrate on which the laccase is immobilized is stacked at the bottom of a reactor and the effluent to be decontaminated is forced to flow through the laccase-containing substrate. In another setting, the same packed-bed reactor can be associated with a continuous-flow system to ensure multiple passages of the effluent through the decontamination substrate. After a sufficient time for inactivation, the decontaminated setting can be released in the environment.

In another embodiment of the invention, a laccase is immobilized on beads that are placed within a fluidized-bed reactor. Air nozzles ensure air injection at the bottom of the reactor and provoke the movement of the beads within the reactor. Therefore, the liquid setting to be decontaminated is brought in contact with the laccase.

In addition, in the uses, methods and compositions of the invention, the laccase may be used in combination with one or more other antibiotic-inactivating enzyme(s). Representative antibiotic-inactivating enzymes include a lipase or a cellulase, as disclosed in WO2012/007536, a ketoreductase, a beta-lactamase or an erythromycin esterase.

The present invention will be further understood with reference to the following non-limiting examples.

### Brief description of the figures

Figure 1 is a graph showing the virginiamycin-inactivation activity of a laccase from *Trametes versicolor*
Figure 2 is a graph showing the virginiamycin-inactivation activity of a laccase from *Myceliophtora thermophila*
Figure 3 is a graph showing the virginiamycin-inactivation activity of a laccase from *Pleurotus ostreatus*
Figure 4 is a graph showing the virginiamycin-inactivation activity of a laccase from *Agaricus bisporus*
Figure 5 is a graph showing the virginiamycin-inactivation activity of a commercial laccase sample (code G100T by Enzyme Supplies)

### Examples

### Example 1: method used to quantify the inactivation of virginiamycin by an enzyme

### Preparation of virginimaycin and enzyme solutions

The virginiamycin commercial product supplied by Santa Cruz Biotechnology is composed of 75 % virginiamycin M₁, 20 % virginiamycin S₁ and 5% of other minor analogues, with a purity > 99 %. According to the supplier, a virginiamycin solution prepared in DMSO is stable for up to 8 months. A virginiamycin stock solution is thus prepared in DMSO at 1 mg/mL (5 mg of commercial product + 5 ml of DMSO) and 1-mL aliquots are stored at 4°C for up to 8 months.
A fresh dilution of the stock solution is prepared extemporaneously into a buffered medium having a pH value of about 7, preferably obtained with a phosphate buffer comprising 50mM mono- and disodium phosphate and 80mM NaCl. Each solution is prepared at 10 µg/mL, i.e. a concentration 2-fold higher than the final antibiotic concentration in the enzymatic reaction assay which is 5 µg/mL.
Laccase solutions are prepared extemporaneously. The laccases purchased from Sigma (ref. L2157 for laccase from *Rhus vernicifera -* ref. 40452 for laccase from *Agaricus bisporus -* ref. 75117 for laccase from *Pleurotus ostreatus -* ref. 51639 for laccase from *Trametes versicolor*) and from Enzyme Supplies (Laccase G100T and Laccase Base products) were furnished under solid form and solubilised in a buffered medium having pH value of about 7, preferably obtained with a phosphate buffer comprising 50mM mono- and disodium phosphate and 80mM NaCl, in order to obtain a solution at 1 mg/mL. The laccase from *M. thermophila* is purchased from Univar under liquid form and is thus used directly for the enzymatic reaction assay. Laccase solutions may be further diluted if needed for the experiment.

Redox mediators solutions are prepared extemporaneously. The redox mediators purchased from Sigma (ref. S7602 for syringaldehyde and ref. D134406 for acetosyringone) were furnished under solid form and solubilised in DMSO, in order to obtain a stock solution at 5 mM. 2 µL of these stock solutions were added to 200 µL of enzymatic reactions in order to reach a final concentration of 50 µM.

### Enzymatic assay

The virginiamycin and laccase solutions are mixed in equal volumes. In parallel, samples without substrate or without laccase are prepared and used as positive and negative controls. The reaction is carried out at atmospheric pressure and ambient temperature (which is preferably between 20°C and 25°C) without agitation, in 96-well sterile serological microplates (Dominique Dutscher, ref. 055272). Samples are withdrawn after 18h of incubation and assessed for their residual virginiamycin activity as described below. Enzymatic reactions were also performed with 50 µM of syringaldehyde or acetosyringone in order to assess their impact on the laccase activities.

### Determination of the residual virginiamycin activity of sample

The residual virginiamycin activity of each sample is determined by a microbiological assay using the strain *Staphyloccocus aureus* ATCC 29213 as indicator. The principle of this method consists in measuring the growth inhibition of *Staphyloccocus aureus* ATCC 29213 by virginiamycin (after incubation of virginiamycin with the enzyme) cultured in liquid medium.

### Medium preparation

A Mueller-Hinton medium is prepared according to the recommendations of the manufacturer (Biorad, ref. 69444). This medium is inoculated with the strain *Staphyloccocus aureus* ATCC 29213 which is sensitive to virginiamycin.

### Microbiological assay

After 18h of incubation, 4 replicates of each enzymatic reaction (enzyme plus virginiamycin) are transferred in sterile plastic 96-well culture microplates (Dominique Dutscher, ref. 055260), and the previously described inoculated medium is then distributed in the same 96-well culture microplates.

The plates are incubated at 37°C with shaking and absorbance measurements at 600 nm are performed each 20 min during 5h. Data are then analysed by plotting absorbance at 600 nm as a function of time in order to generate growth curves and the Area Under Curves (AUCs) are then computed using the R software (R Development Core Team [2008]. R: A language and environment for statistical computing. R Foundation for Statistical Computing, Vienna, Austria. ISBN 3-900051-07-0, URL http://www.R-project.org.). If the enzyme inactivates the virginiamycin activity, then the growth inhibition of *S*. *aureus* is reduced and the AUC is increased. If the enzyme does not inactive the virginiamycin activity, the growth inhibition is maintained and the AUC is similar to the control (virginiamycin only). The amount of virginiamycin inactivated by the enzyme is assessed by comparison with a series of standards containing known amounts of active virginiamycin (prepared extemporaneously) incubated with the sensitive strain *Staphyloccocus aureus* ATCC 29213 during the microbiological assay. A sample with each enzyme tested and no antibiotic is used to evaluate the possible interference of enzymes with the microbiological assay.

### Example 2: Virginiamycin-inactivation activity of the laccase from Trametes versicolor

The study described in this example was conducted with the protocol described in example 1: preparation of solutions, medium preparation and microbiological assays were performed accordingly.

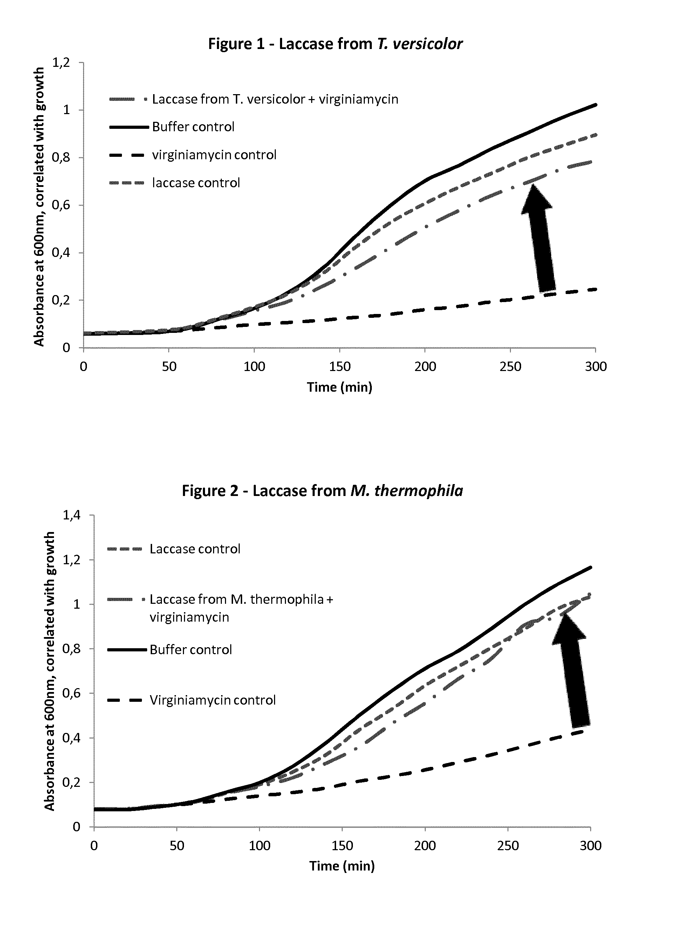

Results for virginiamycin-inactivation by laccase from *Trametes versicolor* are shown in figure 1.

Buffer control shows the growth curve obtained with *S*. *aureus* ATCC 29213 in the absence of virginiamycin, and the laccase control shows that the laccase solution inhibited slightly the growth of *S*. *aureus* ATCC 29213. The virginiamycin control shows the growth curve obtained with *S*. *aureus* ATCC 29213 with the initial virginiamycin concentration used in the enzymatic reaction. The growth curve obtained with the sample from the enzymatic reaction performed with the laccase from *T. versicolor* and virginiamycin shows that *S*. *aureus* ATCC 29213 is less inhibited compared to the virginiamycin control (cf. black arrow), which demonstrates the ability of the laccase enzyme from *T. versicolor* to inactivate virginiamycin. The calculated activity is 1.5 x 10⁻¹¹ mol of virginiamycin inactivated / h / µg of laccase. This result was confirmed in 3 independent experiments.

### Example 3: Virginiamycin-inactivation activity of the laccase from Myceliophtora thermophila

The study described in the present example was conducted with a protocol similar to the one described in example 1: preparation of solutions, medium preparation and microbiological assays were performed accordingly.

Results for virginiamycin-inactivation by laccase from *M. thermophila* are shown in figure 2.

Buffer control shows the growth curve obtained with *S*. *aureus* ATCC 29213 in the absence of virginiamycin, and the laccase control shows that the laccase solution inhibited slightly the growth of *S*. *aureus* ATCC 29213. The virginiamycin control shows the growth curve obtained with *S*. *aureus* ATCC 29213 with the initial virginiamycin concentration used in the enzymatic reaction. The growth curve obtained with the sample from the enzymatic reaction performed with the laccase from *M. thermophila* and virginiamycin shows that *S*. *aureus* ATCC 29213 is less inhibited compared to the virginiamycin control (cf. black arrow), which demonstrates the ability of the laccase enzyme from *M. thermophila* to inactivate virginiamycin.

### Example 4: Virginiamycin-inactivation activity of the laccase from Pleurotus ostreatus

The study described in the present example was conducted with a protocol similar to the one described in example 1: preparation of solutions, medium preparation and microbiological assays were performed accordingly.

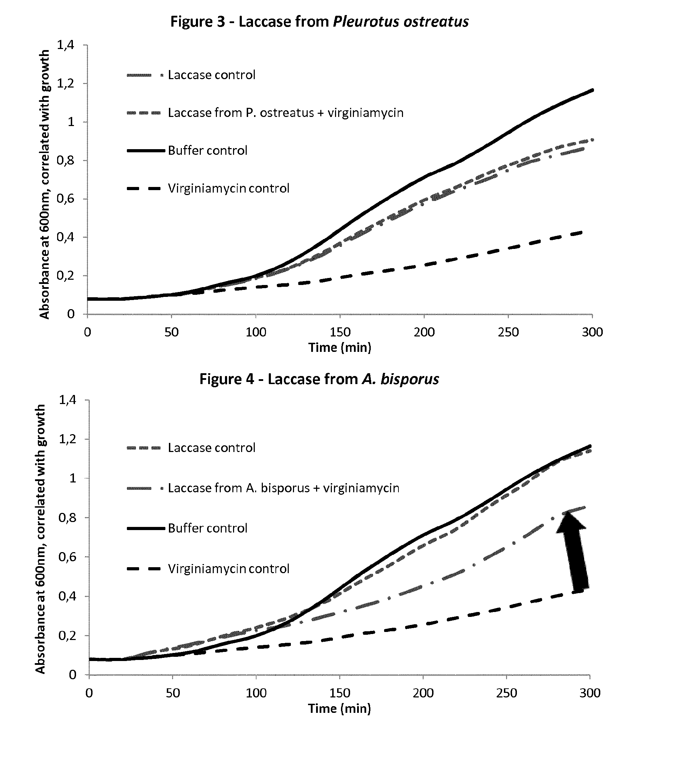

Results for virginiamycin-inactivation by laccase from *P. ostreatus* are shown in figure 3.

Buffer control shows the growth curve obtained with *S*. *aureus* ATCC 29213 in the absence of virginiamycin, and the laccase control shows that the laccase solution did not have any impact on the growth of *S*. *aureus* ATCC 29213. The virginiamycin control shows the growth curve obtained with *S*. *aureus* ATCC 29213 with the initial virginiamycin concentration used in the enzymatic reaction. The growth curve obtained with the sample from the enzymatic reaction performed with the laccase from *P. ostreatus* and virginiamycin shows that *S*. *aureus* ATCC 29213 is less inhibited compared to the virginiamycin control (cf. black arrow), which demonstrates the ability of the laccase enzyme from *P. ostreatus* to inactivate virginiamycin. The calculated activity is 1.1 x 10⁻¹¹ mol of virginiamycin inactivated / h / µg of protein in Sigma product 75117.

### Example 5: Virginiamycin-inactivation activity of the laccase from Agaricus bisporus

The study described in the present example was conducted with a protocol similar to the one described in example 1: preparation of solutions, medium preparation and microbiological assays were performed accordingly.

Results for virginiamycin-inactivation by laccase from *A. bisporus* are shown in figure 4.

Buffer control shows the growth curve obtained with *S*. *aureus* ATCC 29213 in the absence of virginiamycin, and the laccase control shows that the laccase solution did not have any impact on the growth of *S*. *aureus* ATCC 29213. The virginiamycin control shows the growth curve obtained with *S*. *aureus* ATCC 29213 with the initial virginiamycin concentration used in the enzymatic reaction. The growth curve obtained with the sample from the enzymatic reaction performed with the laccase from *A. bisporus* and virginiamycin shows that *S*. *aureus* ATCC 29213 is less inhibited compared to the virginiamycin control (cf. black arrow), which demonstrates the ability of the laccase enzyme from *A. bisporus* to inactivate virginiamycin. The calculated activity is 5.4 x 10⁻¹¹ mol of virginiamycin inactivated / h / µg of protein in Sigma product 40452.

### Example 6: Virginiamycin-inactivation activity of the laccase from Laccase G100T product

The study described in the present example was conducted with a protocol similar to the one described in example 1: preparation of solutions, medium preparation and microbiological assays were performed accordingly.

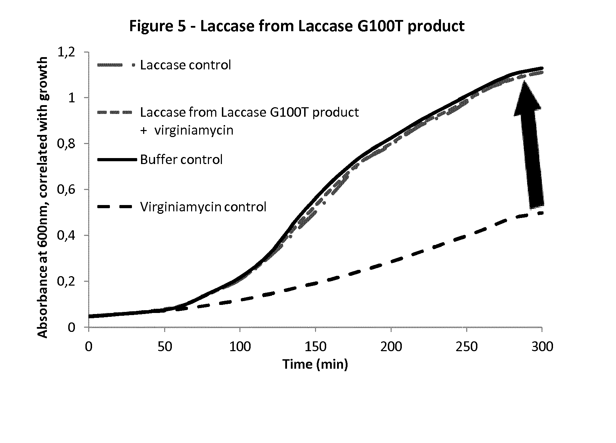

Laccase G100T is a commercial product commercialized by Enzyme Supplies (Oxford, UK). In the commercial product supplied by Enzyme Supplies (Oxford, UK), the laccase is mixed with a redox mediator of undisclosed composition. Results for virginiamycin-inactivation by laccase from Laccase G100T product are shown in figure 5.

Buffer control shows the growth curve obtained with *S*. *aureus* ATCC 29213 in the absence of virginiamycin, and the laccase control shows that the laccase solution did not have any impact on the growth of *S*. *aureus* ATCC 29213. The virginiamycin control shows the growth curve obtained with *S*. *aureus* ATCC 29213 with the initial virginiamycin concentration used in the enzymatic reaction. The growth curve obtained with the sample from the enzymatic reaction performed with the laccase from Laccase G100T product and virginiamycin shows that *S*. *aureus* ATCC 29213 is less inhibited compared to the virginiamycin control (cf. black arrow), which demonstrates the ability of the laccase enzyme from Laccase G100T product to inactivate virginiamycin. The calculated activity is 1.4 x 10⁻⁹ mol of virginiamycin inactivated / h / µg of protein in Laccase G100T product.

### References

Baldrian, P. (2006) Fungal laccases - occurrences and properties. FEMS Microbiol Rev 30, 215-242.
Couto, SR and Herrera, JLT (2006) Industrial and biotechnological applications of laccases: a review. Biotechnol Adv 24, 500-513.
Mayer, A. M. & Staples, R. C. (2002) Laccase: new functions for an old enzyme. Phytochemistry, 60, 551-565.
Thurston, C. (1994) The structure and function of fungal laccases. Microbiology 140, 19.
Torres, E.; Bustos-Jaimes, I. & Le Borgne, S. (2003) Potential use of oxidative enzymes for the detoxification of organic pollutants. Applied Catalysis B: 46, 1-15.

## Claims

1. Use of a laccase for inactivating virginiamycin.

2. The use according to claim 1, for remediation of virginiamycin in the environment or in waste.

3. A method for the enzymatic treatment of an environment setting, in particular soils or waters, comprising treating said environment setting with a laccase, thereby inactivating virginiamycin present in said environment setting.

4. The method according to claim 3, wherein said waters are surface waters such as rivers or lakes, ground waters, underground waters or collected waters, in particular drinking waters, waters destined to the agro-alimentary industry and waters destined to human or animal use.

5. The method according to claim 3, wherein said soils are industrial soils, farm soils or agricultural soils.

6. A method for the enzymatic remediation of waste material or effluent containing virginiamycin before it reaches the environment, comprising bringing said waste material or effluent into contact with a laccase, alone or in combination with one or more antibiotic-inactivating enzymes, thereby inactivating virginiamycin present in said waste material or effluent.

7. The method according to claim 6, wherein said waste material is wastewaters, in particular industrial wastewater, recycled process water, pharmaceutical plant wastewater, municipal wastewater, sanitary wastewater, sewage, farm wastewater, animal farm wastewater, fish farm wastewater, agricultural site wastewater, hospital wastewater, medical center wastewater, nursing home wastewater, urban wastewater, collective wastewater or wastewater treatment plant effluents, manure from animal farms and released effluents.

8. A method for the removal of virginiamycin in the by-products of a bioethanol manufacturing process comprising bringing said by-products into contact with a laccase, alone or in combination with one or more antibiotic-inactivating enzymes, thereby inactivating virginiamycin present in said by-products.

9. The method according to claim 8, wherein said by-products are edible residues, particularly distillers dry grains used as animal feed.

10. The method according to any one of claims 3 to 9, wherein said laccase is from *Trametes versicolor, Myceliophotora thermophila, Pleurotus Ostreatus* or *Agaricus bisporus*

11. The use according to claim 1 or 2 or the method according to any one of claims 3 to 10, wherein the laccase is a laccase, or mixture of laccases, from *Trametes versicolor, Myceliophotora thermophila, Pleurotus Ostreatus* or *Agaricus bisporus.*

12. The use according to claim 1, 2 or 11, or the method according to any one of claims 3 to 11, wherein the laccase is used in combination with one or more other antibiotic-inactivating enzyme(s), preferably selected in the group consisting of a lipase, a cellulase, a ketoreductase, a beta-lactamase and an erythromycin esterase.

13. The use according to any one of claim 1, 2, 11 and 12, or the method according to any one of claims 3 to 12, wherein said virginiamycin is virginiamycin M1 or virginiamycin S1, or a combination of virginiamycin M1 and virginiamycin S1.

14. The use or the method according to claim 13, wherein the combination of virginiamycin M1 and virginiamycin S1 is in a ratio of 75 : 25.

15. The use or method according to any one of claims 1 to 14, wherein the laccase is used in combination with one or more redox mediators such as syringaldehyde or acetosyringone.
